Europäisches Patentamt

(19) European Patent Office    (11) Numéro de publication : **0 006 770**

Office européen des brevets    **B1**

(12)    # FASCICULE DE BREVET EUROPÉEN

(45) Date de publication du fascicule du brevet :    (51) Int. Cl.³ : **F 16 K 31/06, F 02 M   7/18**
08.07.81

(21) Numéro de dépôt : **79400136.2**

(22) Date de dépôt : **05.03.79**

(54) **Electrovanne, notamment pour carburateur.**

(30) Priorité : **28.06.78 FR 7819339**

(43) Date de publication de la demande :
**09.01.80 (Bulletin 80/01)**

(45) Mention de la délivrance du brevet :
**08.07.81 Bulletin 81/27**

(84) Etats contractants désignés :
**DE GB IT SE**

(56) Documents cités :
**FR - A - 1 259 417**
**FR - A - 1 526 045**
**NL - C - 84 807**

(73) Titulaire : **SOCIETE INDUSTRIELLE DE BREVETS ET
D'ETUDES S.I.B.E.
3, Villa Bergerat
F-92200 Neuilly Sur Seine (FR)**

(72) Inventeur : **Bauer, Philippe
1, Square Monte Cristo
F-78160 Marly Le Roi (FR)**

(74) Mandataire : **Fort, Jacques et al
CABINET PLASSERAUD 84, rue d'Amsterdam
F-75009 Paris (FR)**

Imprimerie Jouve, 17, rue du Louvre, 75001 Paris, France

Electrovanne, notamment pour carburateur

La présente invention concerne les électrovannes, dites aussi vannes à commande électromagnétique, du type comprenant un boîtier percé d'une ouverture de passage de fluide, dans lequel un équipage mobile est soumis à l'action d'un ressort de rappel vers l'une de deux positions de butée et à l'action d'une bobine électromagnétique qui l'amène dans l'autre des deux positions de butée, contre l'action du ressort, lorsqu'elle est excitée, ledit équipage mobile comprenant un noyau et une aiguille solidaire du noyau, qui détermine avec l'ouverture un passage de section maximale lorsque l'équipage est dans une première des deux positions de butée et un passage de section minimale lorsque l'équipage est dans sa seconde position de butée.

Le brevet NL-C 84 807 décrit une électrovanne de ce type, utilisable notamment pour un carburateur de moteur de véhicule, dans laquelle, classiquement, une des positions de butée est définie par l'appui de l'aiguille constituant élément obturateur sur un siège entourant l'ouverture de passage.

Une telle électrovanne donne des résultats satisfaisants aussi longtemps que l'ouverture de passage a une section notable et que les pièces constitutives de la vanne ont des dimensions suffisantes pour éviter une usure rapide en fonctionnement.

Ces vannes sont donc destinées à régler un débit de combustible dans un système d'alimentation en combustible pour moteur à combustion interne, en fonction d'un paramètre de fonctionnement du moteur, qui sera souvent la composition des gaz d'échappement. On a également proposé d'effectuer ce réglage en utilisant non pas une vanne à ouverture progressive, mais une électrovanne alimentée par des impulsions électriques périodiques dont le rapport cyclique dépend de la valeur du paramètre de fonctionnement. La nécessité de fonctionner à fréquence élevée exige que l'équipage mobile ait une faible inertie. Si l'on commande directement une section de passage de combustible, cette section doit être très faible.

Dans ces conditions, les composants de la vanne, en particulier l'aiguille et le siège, s'usent très rapidement.

On a tenté d'écarter cette difficulté en commandant non pas la section de passage de combustible, mais la dépression qui agit sur ce combustible pour l'aspirer : l'électrovanne est alors placée sur un circuit d'air et peut avoir des dimensions plus importantes. Cette solution ne constitue toutefois qu'un palliatif.

La présente invention vise à fournir une électrovanne dont l'encombrement et la section de passage de fluide peuvent être très faibles, présentant cependant une grande durée de vie.

L'invention fait usage de la constatation que, bien souvent, il n'est pas nécessaire que l'électrovanne ferme l'ouverture de passage : dans l'exemple donné ci-dessus d'un système d'alimentation en combustible, le moteur doit recevoir un débit de combustible qui reste toujours supérieur à une valeur minimum, lorsqu'il fonctionne.

La vanne suivant l'invention, utilisable chaque fois qu'il n'est pas nécessaire d'assurer une fermeture complète, est caractérisée en ce que le noyau détermine la seconde position de butée par appui contre un guide, pour laquelle l'aiguille détermine avec l'ouverture un passage de section minimale non nulle.

Une telle vanne, qu'on peut qualifier de « tout ou peu » (par opposition aux vannes « tout ou rien »), peut avoir une durée de vie très longue, car il n'y a pas d'usure d'un élément d'obturation. La butée dans le sens correspondant à la plus faible section de passage peut être reportée sur des pièces de dimensions importantes, avec appui plan sur plan.

L'aiguille peut être fixée au noyau, mais il faut alors usiner le noyau et l'aiguille avec précision, d'où un coût élevé. De plus, l'échauffement du noyau lors du fonctionnement de l'électrovanne, en particulier lorsque celle-ci est commandée par des impulsions rectangulaires à fréquence de répétition élevée, produit des dilatations qui peuvent entraîner la désolidarisation du noyau de l'aiguille. Il est plus avantageux de solidariser l'aiguille du noyau par un ressort qui la maintient en appui contre une surface de butée ménagée à cet effet sur le noyau.

L'invention sera mieux comprise à la lecture de la description qui suit d'électrovannes qui en constituent des modes particuliers de mise en œuvre, donnés à titre d'exemples non limitatifs. La description se réfère aux dessins qui l'accompagnent, dans lesquels :

— la figure 1 est une vue en coupe longitudinale de l'électrovanne en position de repos,

— la figure 2 est une vue de droite de la figure 1, une partie du fond étant arrachée,

— la figure 3, similaire à la figure 1, montre une variante de réalisation.

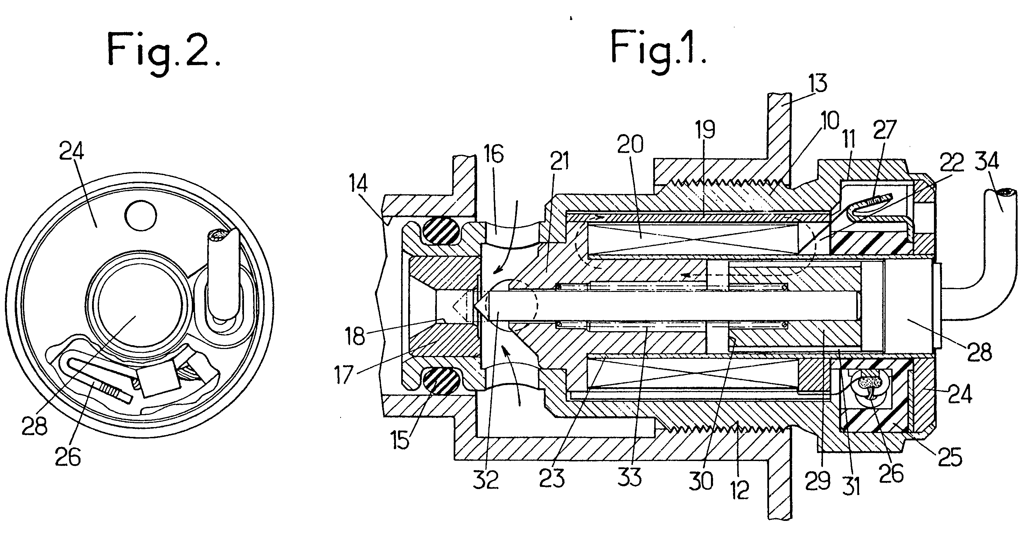

L'électrovanne représentée sur les figures 1 et 2 est destinée à être montée dans un carburateur, sur un circuit d'amenée de combustible. Cette électrovanne comporte un boîtier 10 dans lequel est placé un équipage mobile. Le boîtier 10 comprend un corps 11 muni d'un filetage externe 12 permettant de fixer le boîtier dans la paroi 13. Le boîtier peut notamment être monté dans le trou taraudé généralement prévu au fond des cuves à niveau constant de carburateur, face à un canal de départ de combustible 14, muni généralement d'un gicleur (non représenté). Ce trou permet d'insérer temporairement un appareil de mesure lors du réglage final du carburateur en usine. La partie terminale avant du corps 11 présente alors un diamètre réduit par rapport au reste de l'électrovanne de façon à s'engager dans le canal 14. Cette partie terminale comporte une gorge destinée à recevoir un joint torique d'étanchéité 15. La partie du corps située entre le joint

torique et le filetage est percée d'ouvertures radiales 16 d'entrée de combustible, à partir de la cuve.

Le boîtier 10 comprend également une goupille 17 calibrée, délimitant une ouverture de passage 18, emmanchée à force dans la partie terminale avant du corps. Le corps 11 et la goupille 17 sont en matériau non magnétique, par exemple en bronze ou en laiton.

La partie fixe du circuit électromagnétique de la vanne comprend un tube externe 19, fendu pour être élastique, exercer un effort de serrage et réduire les entrefers. Le tube 19 enserre une collerette d'un guide 21, ainsi qu'une bague 22. Le tube externe 19, le guide 21 et la bague 22 sont en matériau magnétique, par exemple en fer doux. La bobine 20 de commande de l'électrovanne est placée à l'intérieur du tube 19, entre la collerette du guide 21 et la bague 22. Elle est séparée intérieurement du guide 21 par un tube-guide interne 23 en matériau amagnétique. Le tube-guide 23 se prolonge vers l'arrière au-delà de la bague 22. Il délimite, avec le corps 11, la bague 22 et un fond 24 serti dans le corps, une chambre annulaire qui reçoit un flasque isolant 25 dans lequel sont fixées deux cosses de raccordement électrique 26 et 27. Le tube-guide interne 23 est fermé à l'arrière par une goupille de butée 28 dont le rôle apparaîtra plus loin.

L'équipage mobile de la vanne comprend un noyau 29 en fer doux monté dans le tube-guide interne 23 de façon à pouvoir coulisser entre une première position, pour laquelle il est en butée contre la goupille 28, et une seconde position, pour laquelle sa face avant plane 30 est en butée contre une face en regard du guide 21. Des pans coupés 31 sont ménagés sur le noyau mobile 29 pour livrer passage à l'air et éviter l'amortissement des mouvements de va-et-vient du noyau que provoquerait la compression de l'air.

L'équipage mobile comprend, en plus du noyau 29, une aiguille 32 en matériau non magnétique (par exemple en bronze) qui coulisse dans le guide 21. Lorsque le noyau est dans la première position de butée, dans laquelle il est ramené par un ressort de rappel 33, l'aiguille délimite, avec l'ouverture 18, un passage de section maximum. Lorsque le noyau occupe sa seconde position de butée, dans laquelle l'amène la bobine 20 lorsqu'elle est excitée, l'aiguille 32 délimite, avec l'ouverture 18, un passage de section minimum, mais non nulle.

Pour éviter un collage magnétique du noyau 29 sur le guide avant 21, on lui fait avantageusement subir un traitement de surface, par exemple constitué par un revêtement de cuivre, puis de nickel. Un avantage supplémentaire d'un tel revêtement est de donner au noyau un bon état de surface qui diminue les forces de frottement sur le tube-guide interne 23. Par ailleurs, pour augmenter la rigidité de l'ensemble des pièces fixes, la bobine 20 est avantageusement imprégnée de résine sous vide.

Le mode d'assemblage de la vanne étant classique, il n'est pas nécessaire de le décrire ici. On notera seulement que la course du noyau 29 peut être réglée par emmanchement progressif à force de la goupille 28 dans le tube 23.

Un outil de mesure peut être inséré pendant cette opération dans la goupille 17 pour déterminer la position de l'aiguille.

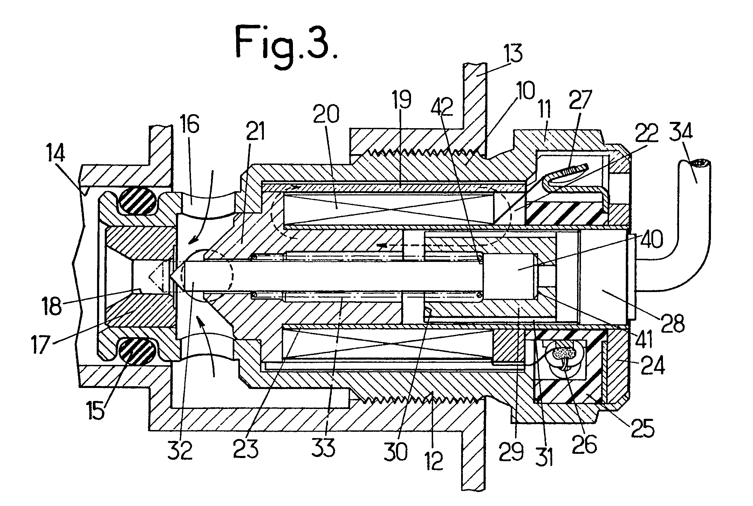

Dans la variante de réalisation montrée en figure 3 (où les organes correspondant à ceux déjà représentés portent le même numéro de référence), l'aiguille 32 est solidarisée du noyau 29 par un ressort qui la maintient en appui contre une surface de butée ménagée sur le noyau 29. Dans le mode de réalisation illustré en figure 3, l'aiguille comporte un renflement terminal arrière 40 de diamètre tel qu'il se loge à frottement doux dans une cavité du noyau 29. La surface de butée du noyau est ménagée sur le fond 41 de celui-ci, dans lequel est prévu un trou de passage d'air.

Le ressort de rappel 33 est comprimé entre le guide 21 et l'épaulement 42 qui limite le renflement 40. Cette solution, utilisable chaque fois que la force du ressort de rappel est suffisante pour que l'aiguille soit maintenue pratiquement en permanence contre le fond 41, a l'avantage de la simplicité.

Les essais ont montré qu'elle permet de réaliser une commande de débit de combustible aussi satisfaisante qu'avec un équipage mobile comprenant une aiguille fixée au noyau, sans risque de désolidarisation.

L'électrovanne qui vient d'être décrite est susceptible de nombreuses applications. En particulier, elle peut être utilisée dans un carburateur pour commander le débit de combustible à partir de la cuve à niveau constant vers un circuit de jaillissement principal, de ralenti ou de transition. La bobine est alors reliée, par son conducteur de sortie 34, à une électronique de commande, dont l'organe d'entrée est par exemple une sonde à oxygène placée sur l'échappement du moteur muni du carburateur.

On voit par ailleurs qu'il est possible de modifier de façon simple un carburateur classique par simple adjonction d'une électrovanne et de son circuit de commande, en utilisant les trous taraudés destinés normalement à des vis de fermeture pour placer l'électrovanne.

**Revendications**

1. Electrovanne comprenant un boîtier (10) percé d'une ouverture (18) de passage de fluide, dans lequel un équipage mobile est soumis à l'action d'un ressort de rappel (33) vers l'une des deux positions de butée et à l'action d'une bobine électromagnétique (20) qui l'amène dans l'autre des deux positions de butée, contre l'action du ressort, lorsqu'elle est excitée, ledit équipage mobile comprenant un noyau (29) et une aiguille (32) solidaire du noyau, qui détermine avec l'ouverture un passage de section maximale lorsque l'équipage est dans une première des deux positions de butée et un passage de section minimale lorsque l'équipage est dans sa seconde position de butée, caractérisée en ce que, le noyau (29) détermine la seconde position de butée par appui contre un guide (21) pour laquelle l'aiguille détermine avec l'ouverture un passage de section minimale non nulle.

2. Electrovanne suivant la revendication 1, caractérisée en ce que le boîtier comprend un corps (11) en matériau amagnétique et un circuit magnétique disposé dans le corps, comportant le guide (21), un tube externe (19) séparant radialement la bobine du corps, et une bague (22), le noyau (29) complétant ce circuit entre le guide et la bague.

3. Electrovanne suivant la revendication 2, caractérisée en ce que le noyau (29) est porté par l'aiguille (32) à l'opposé de l'ouverture de passage et présente une face avant (30) dont le contact avec une face arrière radiale du guide (21) détermine la seconde position de butée.

4. Electrovanne suivant la revendication 2 ou 3, caractérisée en ce que le boîtier comporte un tube-guide (23) en matériau amagnétique, fixé sur le guide (21) et dans lequel coulisse le noyau (29).

5. Electrovanne suivant la revendication 4, caractérisée en ce que la partie arrière du tube-guide (23) contient une goupille (28) emmanchée à force, la première position de butée étant déterminée par l'appui du noyau (29) contre ladite goupille.

6. Electrovanne selon l'une quelconque des revendications précédentes, caractérisée en ce que l'aiguille est maintenue par un ressort (33) en appui contre une surface de butée (41) ménagée sur le noyau.

7. Electrovanne selon la revendication 6, caractérisée en ce que le ressort d'appui est constitué par le ressort de rappel (33) comprimé entre une partie fixe de l'électrovanne et un épaulement (42) de l'aiguille.

8. Electrovanne selon la revendication 7, caractérisée en ce que l'épaulement délimite un renflement (40) de l'aiguille monté à frottement doux dans une cavité cylindrique du noyau, cavité dont le fond constitue ladite surface de butée (41).

9. Electrovanne suivant l'une quelconque des revendications précédentes, caractérisée en ce que le noyau (29) est revêtu, au moins sur face avant, d'une couche mince de matériau amagnétique.

## Claims

1. Electromagnetic valve comprising a case (10) having a fluid passage aperture (18) therethrough, in which a mobile assembly is subjected to the action of a return spring (33) biasing it towards one of two stop positions and to the action of an electromagnetic coil (20) which moves it to the other stop position, against the action of the spring, when it is energized, wherein said mobile assembly comprises a core (29) and a needle (32) fast with the core, which defines with the opening a passage of maximum cross-sectional area when the assembly is in a first one of said stop positions, and a passage of minimum cross-sectional area when the assembly is in its second stop position, characterized in that abutment of the core (29) against a guide (21) determines the second stop position in which said minimum cross-sectional area is different from zero.

2. Electromagnetic valve according to claim 1, characterized in that the case comprises a body (11) made of non-magnetic material and a magnetic circuit disposed in the body, comprising the guide (21), an external tube (19) radially separating the coil from the core and a ring (22), the core (29) completing the circuit between the guide and the ring.

3. Electromagnetic valve according to claim 2, characterized in that the core (29) is carried by the needle (32) opposite the passage aperture and has a front surface (30) whose contact with a radially directed rear end surface of the guide (21) determines the second stop position.

4. Electromagnetic valve according to claim 2 or 3, characterized in that the case comprises a guide tube (23) of non-magnetic material, fixed on the guide (21) and in which the core (29) slides.

5. Electromagnetic valve according to claim 4, characterized in that the rear part of the guide tube (23) contains a force-fitted pin (28), the first stop position being determined by abutment of the core (29) against said pin.

6. Electromagnetic valve according to any one of the preceding claims, characterized in that the needle is held by a spring (33) against a stop surface (41) provided on the core.

7. Electromagnetic valve according to claim 6, characterized in that the bearing spring is formed by the return spring (33) compressed between a fixed part of the electromagnetic valve and a shoulder (42) of the needle.

8. Electromagnetic valve according to claim 7, characterized in that the shoulder defines a bulged part (40) of the needle slidably mounted in a cylindrical cavity of the core, the bottom wall of said cavity forming said stop surface (41).

9. Electromagnetic valve according to any one of the preceding claims, characterized in that the core (29) is coated, at least on its front face, with a thin film of non-magnetic material.

## Ansprüche

1. Magnetventil mit einem eine Öffnung (18) für den Fluiddurchlaß aufweisenden Gehäuse (10), in dem ein Gleitstück von einer Feder (33) in Richtung einer von zwei Anschlagstellungen beaufschlagt und mittels einer elektromagnetischen Spule (20) bei deren Erregung entgegen der Federkraft in die andere Anschlagstellung ver-

schiebbar ist, wobei das Gleitstück einem Kern (29) und eine mit diesem fest verbundene Nadel (32) aufweist, die an der Öffnung einen maximalen Durchlaßquerschnitt freigibt, wenn sich das Gleitstück in einer ersten von zwei Anschlagstellungen befindet, und diesen Durchlaßquerschnitt auf ein Minimum begrenzt, wenn sich das Gleitstück in seiner zweiten Anschlagstellung befindet, dadurch gekennzeichnet, daß durch Anlage des Kerns (29) an einer Führung (21) die zweite Anschlagstellung bestimmt ist, in welcher die Nadel an der Öffnung einen minimalen, von Null abweichenden Durchlaßquerschnitt begrenzt.

2. Magnetventil nach Anspruch 1, dadurch gekennzeichnet, daß das Gehäuse einen Körper (11) aus nichtmagnetischem Material und einen in dem Körper angeordneten Magnetkreis aufweist, welcher die Führung (21), ein äußeres Rohr (19), welches in radialer Richtung die Spule vom Körper trennt, und einen Ring (22) umfaßt, wobei zum Schließen dieses Magnetkreises der Kern (29) zwischen der Führung und dem Ring angeordnet ist.

3. Magnetventil nach Anspruch 2, dadurch gekennzeichnet, daß der Kern (29) auf der der Durchlaßöffnung gegenüberliegenden Seite auf der Nadel (32) angeordnet ist und eine Vorderseite (30) aufweist, deren Anlage an einer radialen Rückseite der Führung (21) die zweite Anschlagstellung bestimmt.

4. Magnetventil nach Anspruch 2 oder 3, dadurch gekennzeichnet, daß das Gehäuse ein Führungsrohr (23) aus nichtmagnetischem Material umfaßt, das auf der Führung (21) befestigt und in welchem der Kern (29) verschiebbar ist.

5. Magnetventil nach Anspruch 4, dadurch gekennzeichnet, daß im hinteren Abschnitt des Führungsrohres (23) ein Einsatzstück (28) mit Preßsitz eingesetzt ist, wobei die erste Anschlagstellung durch Anlage des Kerns (29) an diesem Einsatzstück bestimmt ist.

6. Magnetventil nach einem der vorhergehenden Ansprüche, dadurch gekennzeichnet, daß die Nadel durch eine Feder (33) an einer Anschlagfläche (41) anliegend gehalten ist, welche am Kern ausgebildet ist.

7. Magnetventil nach Anspruch 6, dadurch gekennzeichnet, daß die für die Anlage vorgesehene Feder durch die Rückstellfeder (33) gebildet ist, die zwischen einem festen Teil des Magnetventils und einer Schulter (42) an der Nadel unter Spannung angeordnet ist.

8. Magnetventil nach Anspruch 7, dadurch gekennzeichnet, daß die Schulter an einer Verdickung (40) der Nadel ausgebildet ist, welche mit schwacher Reibung in einer zylindrischen Ausnehmung des Kerns liegt, deren Bodenfläche die Anschlagfläche (41) bildet.

9. Magnetventil nach einem der vorhergehenden Ansprüche, dadurch gekennzeichnet, daß der Kern (29) wenigstens auf der Stirnfläche mit einer dünnen Schicht aus einem nichtmagnetischen Material versehen ist.

Fig.2.

Fig.1.

1

−2/2−

Fig.3.

2